# EUROPEAN PATENT APPLICATION

(11) **EP 4 468 786 A1**
(43) Date of publication of application: **27.11.2024**
(21) Application number: 23746431.8
(22) Date of filing: 29.01.2023
(51) Int. Cl.: H04W 48/08, G16Y 30/00

(54) **PIN ESTABLISHMENT METHOD AND DEVICE**

(30) Priority: 29.01.2022 CN 202210112394
(71) Applicant: VIVO MOBILE COMMUNICATION CO., LTD., Dongguan, Guangdong 523863 (CN)
(72) Inventor: LV, Huazhang, Dongguan, Guangdong 523863 (CN); XIE, Zhenhua, Dongguan, Guangdong 523863 (CN)
(74) Representative: Murgitroyd & Company
(86) International application number: PCT/CN2023/073662
(87) International publication number: WO 2023/143554

(57) **Abstract**

Embodiments of this application disclose a PIN creation method and a device, and belong to the field of communication technologies. The PIN creation method in embodiments of this application includes: sending, by a user equipment, networking request information to a PIN server, where the networking request information is used to request to create a PIN; and receiving, by the user equipment, networking response information from the PIN server. The networking response information includes creation success information or creation failure information, the creation success information indicates that the PIN is successfully created, and the creation failure information indicates that the PIN fails to be created.

## Description

### CROSS-REFERENCE TO RELATED APPLICATION

The present invention claims priority to Chinese Patent Application No. 202210112394.4, filed with the Chinese Patent Office on January 29, 2022 and entitled "PIN CREATION METHOD AND DEVICE", which is incorporated herein by reference in its entirety.

### TECHNICAL FIELD

This application pertains to the field of communication technologies, and specifically relates to a personal internet of things network (Personal IoT Network, PIN) creation method and a device.

### BACKGROUND

There are various devices in homes, offices, and other scenes. These devices include, for example, wearable devices (such as cameras, headsets, watches, headphones, and health monitors), internet of things devices (such as smart lights, cameras, thermostats, doors sensors, voice assistants, speakers, refrigerators, and washing machines), and the like. The foregoing plurality of devices can create PINs to realize interconnection, mutual communication, service acquisition and other services between devices. However, the related technology does not provide a relevant solution on how to create a PIN, and consequently makes it difficult to meet a requirement of communication between devices.

### SUMMARY

Embodiments of this application provide a PIN creation method and a device, to resolve a problem that a requirement of communication between devices cannot be met because a PIN cannot be created in related technologies.

According to a first aspect, a PIN creation method is provided, including: a user equipment sends networking request information to a PIN server. The networking request information is used to request to create a PIN. The user equipment receives networking response information from the PIN server. The networking response information includes creation success information or creation failure information, the creation success information indicates that the PIN is successfully created, and the creation failure information indicates that the PIN fails to be created.

According to a second aspect, a PIN creation method is provided, including: a PIN server receives networking request information from a user equipment. The networking request information is used to request to create a PIN. The PIN server sends networking response information to the user equipment. The networking response information includes creation success information or creation failure information, the creation success information indicates that the PIN is successfully created, and the creation failure information indicates that the PIN fails to be created.

According to a third aspect, a PIN creation method is provided, including: a user equipment establishes a communication connection to a PEMC through non-3GPP access. The user equipment sends first registration request information to the PEMC. The first registration request information is used to request to become a PEGC in a PIN. The user equipment receives first registration response information from the PEMC. The first registration response information includes registration success information or registration failure information, the registration success information indicates that the first registration request information has been verified, and the registration failure information indicates that the first registration request information fails to be verified.

According to a fourth aspect, a PIN creation method is provided, including: a user equipment establishes a communication connection to a PEMC through non-3GPP access. The user equipment sends second registration request information to the PEMC. The second registration request information is used to request to become a PIN element in a PIN. The user equipment receives second registration response information from the PEMC. The second registration response information includes registration success information or registration failure information, the registration success information indicates that the second registration request information has been verified, and the registration failure information indicates that the second registration request information fails to be verified.

According to a fifth aspect, a PIN creation apparatus is provided, including: a sending module, configured to send networking request information to a PIN server, where the networking request information is used to request to create a PIN; and a receiving module, configured to receive networking response information from the PIN server, where the networking response information includes creation success information or creation failure information, the creation success information indicates that the PIN is successfully created, and the creation failure information indicates that the PIN fails to be created.

According to a sixth aspect, a PIN creation apparatus is provided, including: a receiving module, configured to receive networking request information from a user equipment, where the networking request information is used to request to create a PIN; and a sending module, configured to send networking response information to the user equipment, where the networking response information includes creation success information or creation failure information, the creation success information indicates that the PIN is successfully created, and the creation failure information indicates that the PIN fails to be created.

According to a seventh aspect, a PIN creation apparatus is provided, including: a communication establishment module, configured to establish a communication connection to a PEMC through non-3GPP access; a sending module, configured to send first registration request information to the PEMC, where the first registration request information is used to request to become a PEGC in a PIN; and a receiving module, configured to receive first registration response information from the PEMC, where the first registration response information includes registration success information or registration failure information, the registration success information indicates that the first registration request information has been verified, and the registration failure information indicates that the first registration request information fails to be verified.

According to an eighth aspect, a PIN creation apparatus is provided, including: a communication establishment module, configured to establish a communication connection to a PEMC through non-3GPP access; a sending module, configured to send second registration request information to the PEMC, where the second registration request information is used to request to become a PIN element in a PIN; and a receiving module, configured to receive second registration response information from the PEMC, where the second registration response information includes registration success information or registration failure information, the registration success information indicates that the second registration request information has been verified, and the registration failure information indicates that the second registration request information fails to be verified.

According to a ninth aspect, a user equipment is provided. The user equipment includes a processor and a memory, the memory stores a program or an instruction executable on the processor, and when the program or the instruction is executed by the processor, the steps of the method according to the first aspect, the third aspect, or the fourth aspect are implemented.

According to a tenth aspect, a user equipment is provided, including a processor and a communication interface. The communication interface is configured to implement the steps of the method according to the first aspect, the third aspect, or the fourth aspect.

According to an eleventh aspect, a network side device is provided. The network side device includes a processor and a memory, the memory stores a program or an instruction executable on the processor, and when the program or the instruction is executed by the processor, the steps of the method according to the second aspect are implemented.

According to a twelfth aspect, a network side device is provided, including a processor and a communication interface. The communication interface is configured to implement the steps of the method according to the second aspect.

According to a thirteenth aspect, a PIN creation system is provided, including a user equipment and a network side device. The user equipment may be configured to perform the steps of the method according to the first aspect, the third aspect, or the fourth aspect, and the network side device may be configured to perform the steps of the method according to the second aspect.

According to a fourteenth aspect, a readable storage medium is provided. The readable storage medium stores a program or an instruction, and when the program or the instruction is executed by a processor, the steps of the method according to the first aspect, the second aspect, the third aspect, or the fourth aspect are implemented.

According to a fifteenth aspect, a chip is provided. The chip includes a processor and a communication interface, the communication interface is coupled to the processor, and the processor is configured to run a program or an instruction to implement the steps of the method according to the first aspect, the second aspect, the third aspect, or the fourth aspect.

According to a sixteenth aspect, a computer program/program product is provided. The computer program/program product is stored in a storage medium, and the program/program product is executed by at least one processor to implement the steps of the method according to the first aspect, the second aspect, the third aspect, or the fourth aspect.

In embodiments of this application, the user equipment sends the networking request information to the PIN server. The networking request information is used to request to create the PIN. The user equipment receives the networking response information. The networking response information includes the creation success information or the creation failure information. That is, after verifying the networking request information, the PIN server may agree or disagree to a networking request of the user equipment. Embodiments of this application enable the user equipment to create the PIN. This is conducive to meeting a requirement of communication between devices by using the PIN.

### BRIEF DESCRIPTION OF DRAWINGS

FIG. 1 is a schematic diagram of a wireless communication system according to an embodiment of this application;
FIG. 2 is a schematic flowchart of a PIN creation method according to an embodiment of this application;
FIG. 3 is a schematic flowchart of a PIN creation method according to an embodiment of this application;
FIG. 4 is a schematic flowchart of a PIN creation method according to an embodiment of this application;
FIG. 5 is a schematic flowchart of a PIN creation method according to an embodiment of this application;
FIG. 6 is a schematic flowchart of a PIN creation method according to an embodiment of this application;
FIG. 7 is a schematic flowchart of a PIN creation method according to an embodiment of this application;
FIG. 8 is a schematic flowchart of a PIN creation method according to an embodiment of this application;
FIG. 9 is a schematic flowchart of a PIN creation method according to an embodiment of this application;
FIG. 10 is a schematic flowchart of a PIN creation method according to an embodiment of this application;
FIG. 11 is a schematic diagram of a structure of a PIN creation apparatus according to an embodiment of this application;
FIG. 12 is a schematic diagram of a structure of a PIN creation apparatus according to an embodiment of this application;
FIG. 13 is a schematic diagram of a structure of a PIN creation apparatus according to an embodiment of this application;
FIG. 14 is a schematic diagram of a structure of a PIN creation apparatus according to an embodiment of this application;
FIG. 15 is a schematic diagram of a structure of a communication device according to an embodiment of this application;
FIG. 16 is a schematic diagram of a structure of a user equipment according to an embodiment of this application; and
FIG. 17 is a schematic diagram of a structure of a network side device according to an embodiment of this application.

### DESCRIPTION OF EMBODIMENTS

The following clearly describes the technical solutions in embodiments of this application with reference to the accompanying drawings in embodiments of this application. Apparently, the described embodiments are some but not all of the embodiments of this application. All other embodiments obtained by a person of ordinary skill in the art based on embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that technologies described in embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in embodiments of this application may be used interchangeably. The technologies described can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6th generation (6th Generation, 6G) communication system.

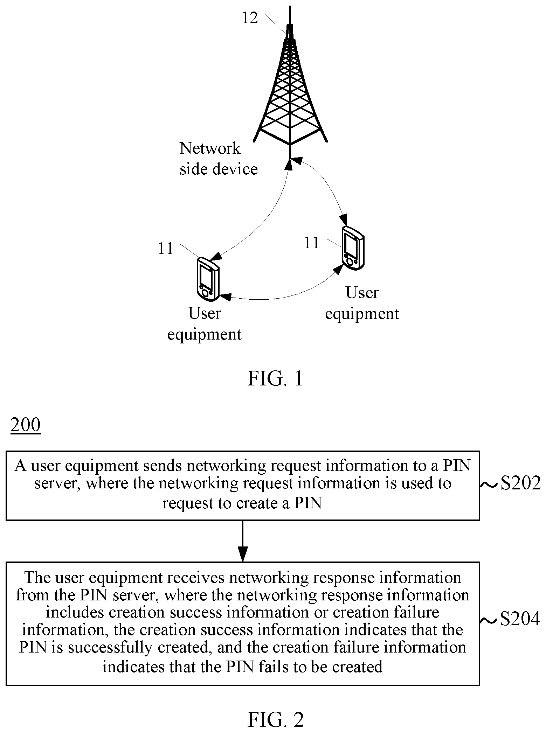

FIG. 1 is a block diagram of a wireless communication system to which embodiments of this application may be applied. The wireless communication system includes a user equipment 11 and a network side device 12. The user equipment 11 may be a user equipment side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (household devices with wireless communication functions, such as a refrigerator, a television, a washing machine, or furniture), a game console, a personal computer (personal computer, PC), a teller machine, or a self-service machine, and the wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, or the like. It should be noted that a specific type of the user equipment 11 is not limited in embodiments of this application. The network side device 12 may include an access network device or a core network device. The access network device may also be referred to as a radio access network device, a radio access network (Radio Access Network, RAN), a radio access network function, or a radio access network unit. The access network device may include a base station a wireless local area network (Wireless Local Area Network, WLAN) access node, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in embodiments of this application, only a base station in an NR system is used as an example, but a specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in embodiments of this application, only a core network device in an NR system is used as an example for description, and a specific type of the core network device is not limited.

With reference to the accompanying drawings, the following describes in detail a PIN creation method provided in embodiments of this application by using some embodiments and application scenarios thereof.

As shown in FIG. 2, an embodiment of this application provides a PIN creation method 200. The method may be performed by a user equipment. In other words, the method may be performed by software or hardware installed in the user equipment. The method includes the following steps.

S202: The user equipment sends networking request information to a PIN server, where the networking request information is used to request to create a PIN.

S204: The user equipment receives networking response information from the PIN server, where the networking response information includes creation success information or creation failure information, the creation success information indicates that the PIN is successfully created, and the creation failure information indicates that the PIN fails to be created.

The user equipment in this embodiment may be a personal internet of things network element with management capability (PIN element with management capability, PEMC). Specifically, the user equipment may be an enabler (enabler) on the PEMC, such as an application (Application, APP) on the PEMC or an enabled client. Before this embodiment is executed, the user equipment has subscribed to an operator to become a user of the operator; and has obtained an identity of the PEMC; and also obtained an internet protocol (Internet Protocol, IP) address of the PIN server. In an implementation, a networking request can be triggered only after obtaining the identity of the PEMC.

Optionally, before S202, the method further includes the following steps: The user equipment sends a subscription request information to the PIN server, and the subscription request information is used to request at least one of the following: become a PEMC; register in or subscribe to an operator network; and the user equipment receives subscription success information from the PIN server. The subscription success information indicates that the user equipment becomes a PEMC, and a new PEMC identity (Identity, ID) can be assigned to the PEMC. The subscription failure means that the PEMC fails to perform registration and subscription, and does not obtain the role of PEMC. In addition, the PIN server should indicate the reason for this subscription failure.

Optionally, the subscription request information includes at least one of the following: (a) an application ID on the PEMC, where in a case that the user equipment is a PEMC, the application ID on the PEMC is an application ID on the user equipment; (b) a subscription permanent identifier (Subscription Permanent Identifier, SUPI) of the user equipment; (c) a generic public subscription identifier (Subscription Permanent Identifier, GPSI) of the user equipment; (d) an IP address of the user equipment; (e) an PEMC client IP address, where in a case that the user equipment is a PEMC, the PEMC client IP address is a client IP address of the user equipment; and (f) a security credential.

In the PIN creation method provided by embodiments of this application, the user equipment sends the networking request information to the PIN server. The networking request information is used to request to create the PIN. The user equipment receives the networking response information. The networking response information includes the creation success information or the creation failure information. That is, after verifying the networking request information, the PIN server may agree or disagree to a networking request of the user equipment. Embodiments of this application enable the user equipment to create the PIN. This is conducive to meeting a requirement of communication between devices by using the PIN. The creation failure information indicates that the networking request is not agreed to, and the PIN server may indicate the reason for this networking failure.

At the same time, embodiments of this application can also resolve the following technical problems. Because different internet of things devices are developed by different manufacturers, there are different access methods and different design structures. Currently, there is no a unified architecture and a unified process that allow devices from a plurality of manufacturers to create PINs. Embodiments of this application enable different internet of things devices to create PINs. This is conducive to meeting a requirement of communication between devices by using the PINs.

Based on the embodiment 200, optionally, the networking request information may include at least one of the following (1) to (6).
(1) Life cycle information of the PIN. The life cycle information is used to indicate a time when the PIN takes effect or exists.
(2) Identifier information related to the user equipment. Optionally, the identifier information related to the user equipment includes at least one of the following: (a) an ID of the PEMC in the PIN, where in a case that the user equipment is a PEMC, the ID of the PEMC is an ID of the user equipment; (b) an enabler ID of the user equipment; (c) the SUPI of the user equipment, (d) the GPSI of the user equipment; (e) the application ID on the PEMC in the PIN, where in a case that the user equipment is a PEMC, the application ID on the PEMC is the application ID on the user equipment; and (f) an enabled client ID of the PEMC in the PIN, where in a case that the user equipment is a PEMC, the enabled client ID of the PEMC is an enabled client ID of the user equipment.
(3) The IP address or a port number of the user equipment.
(4) Information of a PIN element (PIN element) that the user equipment expects to add to the PIN. The PIN element may be a user equipment. Optionally, the information of the PIN element includes at least one of the following: an ID of the PIN element, an enabler ID of the PIN element, a user equipment ID of the PIN element, the application ID on the PEMC in the PIN, an IP address of the PIN element, and an enabler IP address of the PIN element.
   It can be understood that in a case that the user equipment is a PEMC, the PEMC may have determined a part of PIN elements before creating the PIN, and therefore the networking request information may include information of these PIN elements. In another embodiment, a PIN element in the PIN may be added after the PIN is created. Therefore, the networking request information may not include information of the PIN element.
(5) Information of a personal internet of things network element with gateway capability (PIN element with Gateway capability, PEGC) in the PIN. The PEGC may be a user equipment. Herein, the PEGC is a PIN element with gateway capability, and mainly acts as a gateway for user plane interaction between the PIN and a target network system (such as the 5G system). Optionally, the information of the PEGC includes at least one of the following: an ID of the PEGC, an enabler ID of the PEGC, a user equipment ID of the PEGC, an application ID on the PEGC, and an IP address of the PEGC.
   It can be understood that in a case that the user equipment is a PEMC, the PEMC may have determined a PEGC in the PIN before creating the PIN, and therefore the networking request information may include the information of the PEGC. In another embodiment, the PEGC in the PIN may be determined after the PIN is created. Therefore, the networking request information may not include the information of the PEGC. Optionally, the PEMC and the PEGC in the PIN may be a same user equipment.
(6) A security credential.

In foregoing embodiments, the creation success information includes at least one of the following.
(1) An ID of the PIN. That is, after the PIN is successfully created, each PIN has an identifier assigned by a network side.
(2) The information of the PEGC in the PIN.
(3) Access control information configured to the PEGC in the PIN. The access control information is used to control whether the PIN element in the PIN can visit or access the target network. The target network may be a 5G network. Optionally, the access control information includes at least one of the following: a user name, an account number, a password, a service set identifier (Service Set Identifier, SSID), and a basic service set identifier (Basic Service Set Identifier, BSSID). The member PIN element in the PIN can be accessed by using Wi-Fi (for example, by using the SSID), and uses a user plane, an account number, a password, and the like assigned by the network side to visit the target network. The target network may be a 5G network or the internet.
(4) Routing information configured to the PEGC in the PIN. The routing information is used for the PEGC or the PIN element in the PIN to visit the target network. The target network may be a 5G network. Optionally, the routing information includes at least one of the following: an IP address of a user plane function (User Plane Function, UPF), a port number of the UPF, a fully qualified domain name (Fully Qualified Domain Name, FQDN) of the UPF, and a data network (Data Network, DN) connected by using the UPF. The PEGC visits the target network by accessing the UPF, and the target network may be a 5G network.

The foregoing embodiments mainly introduce how the user equipment creates a PIN. The following will describe how the user equipment determines the PEGC in the PIN.

The user equipment (such as the PEMC) may add the PEGC to the PIN in the following methods. One method is that the PEGC has a direct connection to the PEMC, such as a wired direct connection or a wireless direct connection. In this way, after the PEGC and the PEMC communicate, the PEGC may interact with the PEMC. Therefore, the PEGC can be registered in the PEMC, and the PEMC can set the PEGC as a gateway of the PIN. Another method is that after the PEGC is started, the PEGC directly interacts with the PIN server to register in the PIN server, and then obtains a role of a gateway from the operator. Then, when the PEMC triggers the networking request of the PIN, the PIN server assigns the PEGC to the networking request or the PIN to become a gateway. In this way, the PEMC can obtain an IP address of the gateway, the PEMC and the PEGC establish a communication process, the PEGC can be registered in the PEMC, and both are on the same PIN.

Optionally, the user equipment determines the PEGC in the PIN by using at least one of the following methods.
(1) The PEGC subscribes to or registers in the user equipment. The user equipment in this example may be a PEMC. In this example, the PEGC in the PIN may be determined through a subscription or registration process between the PEGC and the PEMC.
(2) The creation success information includes the information of the PEGC. In this example, the PIN server can specify a PEGC in the PIN.
(3) The PIN element in the PIN managed by the user equipment visits the target network by using the determined PEGC in the PIN. In this example, the PIN element may visit the target network by using a specific PEGC, and the user equipment such as the PEMC may designate the PEGC as the PEGC in the PIN.

In an embodiment, in a case that the PEGC subscribes to or registers in the user equipment, the method further includes the following steps. (1) The user equipment establishes a communication connection to the PEGC through non-3GPP access. For example, the communication connection is established through hotspot direct connection. (2) The user equipment receives first registration request information from the PEGC. (3) The user equipment verifies the first registration request information and sends first registration response information. The first registration response information includes registration success information or registration failure information, the registration success information indicates that the first registration request information has been verified, and the registration failure information indicates that the first registration request information fails to be verified. If the first registration request information fails to be verified, it means that PEGC fails to perform registration and subscription. In addition, the user equipment (or PEMC) should indicate the reason for this registration failure.

Optionally, the first registration request information includes at least one of the following: the ID of the PEGC, the enabler ID of the PEGC, the ID of the user equipment, the application ID on the PEGC, the IP address of the PEGC, the security credential, the access control information, and the routing information.

Optionally, the first registration response information includes at least one of the following: a registration ID, registration termination time information, and a context ID of the PEGC.

The foregoing embodiments mainly introduce how the user equipment creates the PIN and how the user equipment determines the PEGC in the PIN. The following will introduce how the user equipment adds a PIN element to the PIN.

When the PIN is successfully created, the PIN already includes the PEMC and the PEGC. At this time, another internet of things device may wish to join the PIN. There are two methods to add an internet of things device to the PIN. One method is that the PEMC opens its own hotspot. In this case, the PIN element can access the hotspot and register in the PEMC. The PEMC can pull the device into a specific PIN to become a member. Another method is that the PIN element itself is a user equipment, then the PIN element can also open its own hotspot for the PEMC to access. After the PEMC interacts with the PIN element, because hotspots of PIN elements are different (for example, the SSID), then PEMC can distinguish different PIN elements, and finally, pull these PIN elements into the PIN to become members.

Optionally, the foregoing embodiments further includes the following step. The user equipment adds a PIN element to the PIN.

That the user equipment adds a PIN element to the PIN includes: (1) The user equipment establishes a communication connection to the PIN element through non-3GPP access. For example, the communication connection is established through hotspot direct connection. (2) The user equipment receives second registration request information from the PIN element. (3) In a case that the second registration request has been verified, the user equipment adds the PIN element to the PIN. (4) The user equipment sends second registration response information.

Optionally, the second registration request information includes at least one of the following: the ID of the PIN element, the enabler ID of the PIN element, an application ID on the PIN element, the IP address of the PIN element, and the security credential.

Optionally, the second registration response information includes at least one of the following: the registration ID, the registration termination time information, the context ID of the PIN element, and the ID of the PIN. If the second registration request fails to be verified, the user equipment should give the reason for the registration failure.

In a case that the user equipment adds a PIN element, the method further includes: The user equipment determines permission of the PIN element. The permission includes, for example, whether 5G can be visited by using the PEGC, and whether another service server can be visited by using the 5G network. The second registration response information also includes at least one of the following.
(1) The IP address of the PEGC in the PIN.
(2) A port number of the PEGC in the PIN.
(3) Access permission of the PIN element. The access permission includes whether the PIN element supports access to the target network by using the PEGC in the PIN. The target network may be a 5G network.

Optionally, the access permission of the PIN element is obtained by the user equipment from the PIN server, or is determined by the user equipment based on PEGC registration information. For example, the PIN element may access the target network by using the PEGC through the user name, the account number, the password, the service set identifier (Service Set Identifier, SSID), the basic service set identifier (Basic Service Set Identifier, BSSID), and the like issued by the PEMC.

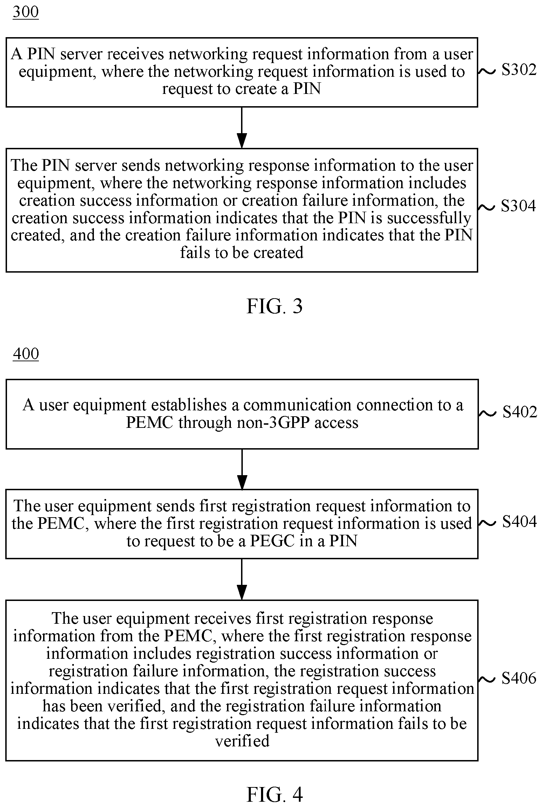

The PIN creation method according to embodiments of this application is described above in detail with reference to FIG. 2. A PIN creation method according to another embodiment of this application is described in detail below with reference to FIG. 3. It can be understood that description from a PIN server side is the same as or corresponds to the description from the user equipment side in the method shown in FIG. 2. To avoid repetition, relevant description is appropriately omitted.

FIG. 3 is a schematic flowchart of implementing the PIN creation method according to this embodiment of this application. The method may be applied to the PIN server side. As shown in FIG. 3, a method 300 includes the following steps.

S302: A PIN server receives networking request information from a user equipment, where the networking request information is used to request to create a PIN. The PIN server is configured to verify or agree to the PIN networking request.

S304: The PIN server sends networking response information to the user equipment, where the networking response information includes creation success information or creation failure information, the creation success information indicates that the PIN is successfully created, and the creation failure information indicates that the PIN fails to be created.

In the PIN creation method provided by embodiments of this application, the PIN server receives the networking request information. The networking request information is used to request to create the PIN. The PIN server sends the networking response information to the user equipment. The networking response information includes the creation success information or the creation failure information. That is, after verifying the networking request information, the PIN server may agree or disagree to a networking request of the user equipment. Embodiments of this application enable the user equipment to create the PIN. This is conducive to meeting a requirement of communication between devices by using the PIN. The creation failure information indicates that the networking request is not agreed to, and the PIN server may indicate the reason for this networking failure.

Optionally, in an embodiment, the networking request information includes at least one of the following: (1) life cycle information of the PIN, where the life cycle information is used to indicate a time when the PIN takes effect or exists; (2) identifier information related to the user equipment; (3) an IP address or a port number of the user equipment; (4) information of a PIN element that the user equipment expects to add to the PIN; (5) information of a PEGC in the PIN; and (6) a security credential.

Optionally, in an embodiment, the identifier information related to the user equipment includes at least one of the following: an ID of a PEMC in the PIN, an enabler ID of the user equipment, an SUPI of the user equipment, a GPSI, an application ID on the PEMC in the PIN, and an enabled client ID of the PEMC.

Optionally, in an embodiment, the information of the PIN element includes at least one of the following: an ID of the PIN element, an enabler ID of the PIN element, a user equipment ID of the PIN element, the application ID on the PEMC in the PIN, an IP address of the PIN element, and an enabler IP address of the PIN element.

Optionally, in an embodiment, the information of the PEGC includes at least one of the following: an ID of the PEGC, an enabler ID of the PEGC, a user equipment ID of the PEGC, an application ID on the PEGC, and an IP address of the PEGC.

Optionally, in an embodiment, the creation success information includes at least one of the following: (1) an identifier ID of the PIN; (2) the information of the PEGC in the PIN; (3) access control information configured to the PEGC in the PIN, where the access control information is used to control whether the PIN element in the PIN can visit or access a target network; and (4) routing information configured to the PEGC in the PIN, where the routing information is used for the PEGC or the PIN element in the PIN to visit the target network.

Optionally, in an embodiment, the access control information includes at least one of the following: a user name, an account number, a password, an SSID, and a BSSID; and/or the routing information includes at least one of the following: an IP address of a UPF, a port number of the UPF, an FQDN of the UPF, and a data network DN connected by using the UPF, where the PEGC visits the target network by accessing the UPF.

Optionally, in an embodiment, the method further includes: The PIN server sends the information of the PEGC in the PIN to the user equipment.

FIG. 4 is a schematic flowchart of implementing a PIN creation method according to an embodiment of this application. The method may be applied to a user equipment such as a PEGC side. As shown in FIG. 4, a method 400 includes the following steps.

S402: The user equipment establishes a communication connection to a PEMC through non-3GPP access.

S404: The user equipment sends first registration request information to the PEMC, where the first registration request information is used to request to become a PEGC in a PIN.

S406: The user equipment receives first registration response information from the PEMC, where the first registration response information includes registration success information or registration failure information, the registration success information indicates that the first registration request information has been verified, and the registration failure information indicates that the first registration request information fails to be verified. The verification failure means that a registration request is not agreed to, and the PEMC may indicate the reason for this registration failure.

According to the PIN creation method provided by embodiments of this application, the user equipment can apply to become the PEGC in the PIN. The PEGC enables a PIN element in the PIN to visit a 5G network or visit another service server by using the 5G network. This is conducive to meeting a requirement of communication between devices by using the PIN.

Optionally, in an embodiment, the first registration request information includes at least one of the following: an ID of the user equipment, an enabler ID of the user equipment, an application ID on the user equipment, an IP address of the user equipment, a security credential, access control information, and routing information; and/or the first registration response information includes at least one of the following: a registration ID, registration termination time information, and a context ID of the user equipment.

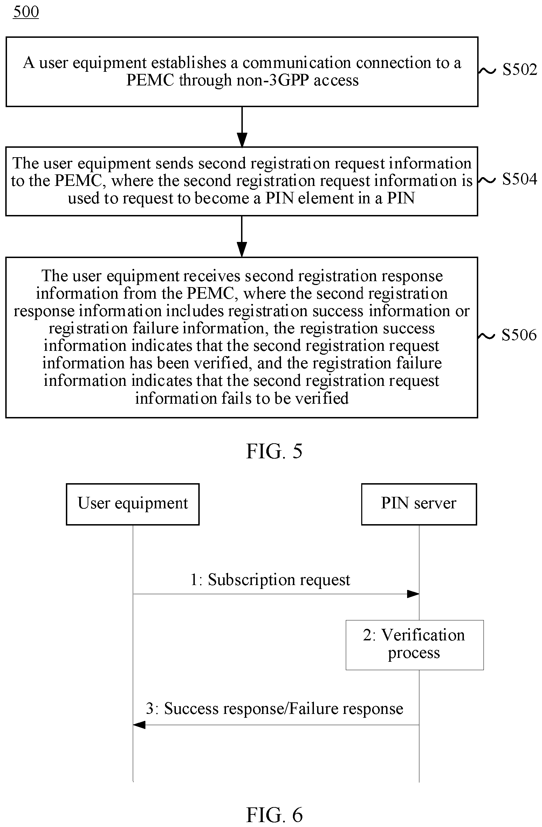

FIG. 5 is a schematic flowchart of implementing a PIN creation method according to an embodiment of this application. The method may be applied to a user equipment such as a PIN element side. As shown in FIG. 5, a method 500 includes the following steps.

S502: The user equipment establishes a communication connection to a PEMC through non-3GPP access.

S504: The user equipment sends second registration request information to the PEMC, where the second registration request information is used to request to become a PIN element in a PIN.

S506: The user equipment receives second registration response information from the PEMC, where the second registration response information includes registration success information or registration failure information, the registration success information indicates that the second registration request information has been verified, and the registration failure information indicates that the second registration request information fails to be verified. The verification failure means that a registration request has not been agreed to, and the PEMC may indicate the reason for this registration failure.

According to the PIN creation method provided by embodiments of this application, the user equipment can apply to become the PIN element in the PIN. The PIN element can visit a 5G network by using the PEGC in the PIN or visit another service server by using the 5G network. This is conducive to meeting a communication requirement.

Optionally, in an embodiment, the second registration request information includes at least one of the following: an ID of the user equipment, an enabler ID of the user equipment, an application ID on the user equipment, an IP address of the user equipment, and a security credential; and/or the second registration response information includes at least one of the following: a registration ID, registration termination time information, a context ID of the user equipment, and an ID of the user equipment.

Optionally, in an embodiment, the second registration response information also includes at least one of the following: (1) an IP address of the PEGC in the PIN; (2) a port number of the PEGC in the PIN; and (3) access permission of the user equipment, where the access permission includes whether the user equipment supports access to a target network by using the PEGC in the PIN.

To describe in detail the PIN creation method in embodiments of this application, the following uses several specific embodiments for description.

### Embodiment 1

This embodiment will introduce how a PEMC subscribes to an operator. As shown in FIG. 6, this embodiment includes the following steps.

Step 1: A specific user equipment (User Equipment, UE), or a PEMC enabler (enabler) on the UE, or a client on the UE, triggers a subscription request to a PIN server. The PIN server is controlled by the operator. This subscription request is used to request to become a PEMC, that is, a PIN element with management capability.

The subscription request may include at least one of the following: a client (client) ID, an SUPI, or a GPSI of the PEMC, an IP address of the UE, a client IP address of the PEMC, a security credential (security credentials), and the like.

The UE or the PEMC enabler usually needs to know an IP address of the PIN server in advance. It can also be understood that this process registers the PIN client in the PIN server.

Step 2: After receiving the subscription request, the PIN server needs to verify the subscription request and verify the security credential, to ensure that the subscription request comes from a legal device, and verify whether the subscription request is reasonable.

Step 3: The PIN server sends a success response or failure response to the UE.

If the success response is received, it means that the PEMC successfully performs registration and subscription, and becomes the role of the PEMC.

If the failure response is received, it means that the PEMC fails to perform registration and subscription, and does not obtain the role of the PEMC. In addition, the PIN server should indicate the reason for this subscription failure.

### Embodiment 2

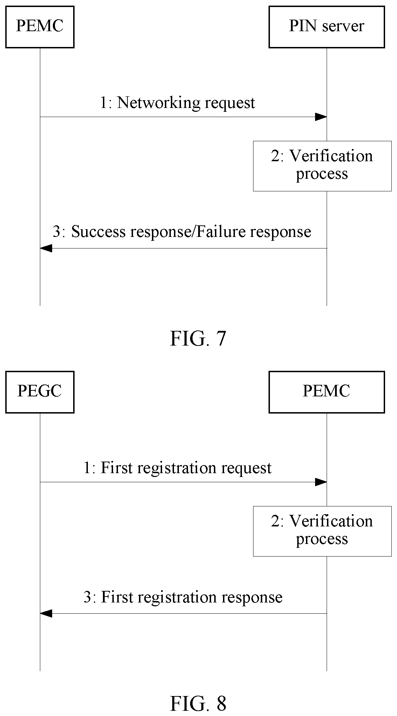

This embodiment will introduce a networking request triggered by a PEMC. At this time, a specific UE subscribes to an operator and obtains a PEMC identity; and also obtains an IP address of a PIN server. As shown in FIG. 7, this embodiment includes the following steps.

Step 1: A user equipment, or a PEMC, or a PEMC enabler initiates a networking request to a PIN server, to create a PIN.

The networking request herein may include the following content.
(1) A security credential (safety credentials).
(2) Life cycle information of the PIN. The life cycle information is used to indicate a time when the PIN takes effect or exists.
(3) There are also a PEMC ID, a PEMC enabler ID, a UE ID, an application ID on the PEMC, and a current IP address of the PEMC itself.
(4) Other PIN element information that PEMC expects to add to this PIN network, such as a PIN element ID, a PINE enabler ID, the UE ID (the SUPI and the like), the application ID on the PEMC, a PIN element, or an IP address of a PINE enabler.
(5) Information of a PEGC that has been registered in the PEMC is also included, such as a PEGC ID, a PEGC enabler ID, the UE ID, an application ID on the PEGC, and a current IP address of the PEGC itself.

In other words, when the PEMC triggers the networking request, there may be no PIN member, or there may already be a PIN member, such as the PEGC or the PIN element.

Step 2: After receiving the networking request, the PIN server needs to verify the networking request and the security credential, to ensure that the networking request comes from a legal device, and verify whether the networking request is reasonable.

Step 3: The PIN server sends a success response or failure response to the PEMC.

If the success response is received, it means the networking is successful.

In this case, the PIN server issues an ID of the PIN.

The PIN server issues the information of the PEGC to the PEMC, including the PEGC ID, the PEMC enabler ID, the UE ID, the application ID on the PEMC, the current IP address of the PEMC, and a port number.

In addition, the PIN server also issues access control information and routing information related to the PEGC.

The access control information includes: a user name, an account number, a password, an SSID, a BSSID, and the like that can access or visit 5G.

The routing information includes: routing information used to visit 5G. For example, the PEGC needs to be connected to a UPF user plane to visit 5G, which includes an IP address of the UPF, a port number, and the like.

If the failure response is received, it means that the networking request is not agreed to. In addition, the PIN server should indicate the reason for this networking failure.

### Embodiment 3

This embodiment will introduce how to add a PEGC to a PIN, which is introduced in two sub-embodiments below.

Embodiment 3-1: direct connection manner.

In this embodiment, the PEGC can be directly connected to a PEMC, for example, in a wired or wireless manner. For example, in the wireless manner, the PEMC provides a Wi-Fi hotspot, and the PEGC accesses the Wi-Fi, verifies a user name, an account number, a password, and subscribes to or registers in the PEMC. Alternatively, the PEGC provides a Wi-Fi hotspot, and the PEMC chooses which PEGC to use. As shown in FIG. 8, this embodiment includes the following steps.

This embodiment is a process for the PEGC to register in the PEMC, provided that the PEGC and the PEMC have already communicated and interacted.

Step 1: The PEGC or a PEGC enabler initiates a first registration request to the PEMC. The first registration request may include at least one of the following: a PEGC ID, a PEGC enabler ID, a UE ID, an application ID on the PEGC, a current IP address of the PEGC itself, and a security credential.

Step 2: After receiving the first registration request, the PEMC verifies the first registration request and verifies the security credential, to ensure that the first registration request comes from a legal device, and verify whether the first registration request is reasonable.

Step 3: The PEMC sends a first registration response to the PEGC.

If registration succeeds, the PEMC sends to the PEGC: a registration ID (registration ID), a termination time (that is, when does this registration expire), and a context ID of the PEGC.

If registration fails, the reason for the failure is given.

Embodiment 3-2: By using the PIN server.

In this manner, the PEGC registers in the PIN server, which can also be called PEGC subscribes to the PIN server. Then, when the PEMC triggers a networking request, the PIN server composes a PIN and specifies the PEGC. This process can be referred to Embodiment 2, which is similar to the process of registering the user equipment or the PEMC in the PIN server, and details is not described again.

### Embodiment 4

This embodiment will introduce how to add a PIN element to a PIN, which is described in two sub-embodiments below.

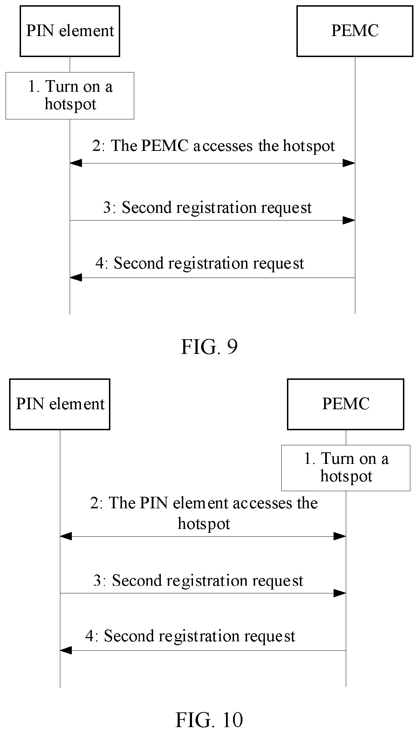

Embodiment 4-1: The PIN element (element) serves as a hotspot. As shown in FIG. 9, this embodiment includes the following steps.

Step 1: The PIN element can turn on the hotspot.

Step 2: The PEMC communicates with the PIN element by using the hotspot of the PIN element. Because PIN elements are different from each other at this time, and hotspots of the PIN elements are also different, PEMCs can be distinguished from each other.

Step 3: The PIN element or PIN element enabler registers in the PEMC and sends a second registration request.

The second registration request includes: a PIN element enabler ID, a PIN element ID, a UE ID, an application ID on the PIN element, a current IP address of the PIN element itself, and a security credential.

Step 4: If registration succeeds, the PEMC sends a second registration response to the PIN element, which may include the following content: a registration ID, a termination time (that is, when does this registration expire), and a PIN element context ID.

In this embodiment, the PEMC can also determine permission of the PIN element, and the second registration response can also include an IP address, a port number, and access permission of a PEGC.

The access permission is permission to visit a 5G network, and may include the following access control information and routing information.

The access control information includes: a user name, an account number, a password, an SSID, a BSSID, and the like that can access or visit 5G.

The routing information includes: the IP address and the port number of the PEGC. This is because the PIN element needs to visit the 5G network or access a public network server by using a gateway.

In addition, the PEMC adds the PIN element to a specific PIN and sends an ID of the PIN to the PIN element.

Embodiment 4-2: The PEMC serves as a hotspot. As shown in FIG. 10, this embodiment includes the following steps.

Step 1: The PEMC may turn on a hotspot.

Step 2: The PIN element communicates with the PEMC through the hotspot of the PEMC. PIN elements are different from each other at this time, but PEMC hotspots are the same one. Therefore, the PEMC cannot distinguish different PIN elements from each other, and registration needs to be performed.

Step 3: The PIN element or the PINE enabler registers in the PEMC and sends a second registration request.

The second registration request includes: a PIN element enabler ID, a PIN element ID, a UE ID, an application ID on the PIN element, a current IP address of the PIN element itself, and a security credential.

Step 4: If registration succeeds, the PEMC sends a second registration response to the PIN element, which may include the following content: a registration ID, a termination time (that is, when does this registration expire), and a PIN element context ID.

In this embodiment, the PEMC can also determine permission of the PIN element, and the second registration response can also include an IP address, a port number, and access permission of a PEGC.

The access permission is permission to visit a 5G network, and may include the following access control information and routing information.

The access control information includes: a user name, an account number, a password, an SSID, a BSSID, and the like that can access or visit 5G.

The routing information includes: the IP address and the port number of the PEGC. This is because the PIN element needs to visit the 5G network or access a public network server by using a gateway.

In addition, the PEMC adds the PIN element to a specific PIN and sends an ID of the PIN to the PIN element.

If registration fails, the reason for the failure is given.

The PIN creation method provided in embodiments of this application may be executed by a PIN creation apparatus. In embodiments of this application, the PIN creation apparatus performing the PIN creation method is used as an example to illustrate the PIN creation apparatus provided by embodiment of this application.

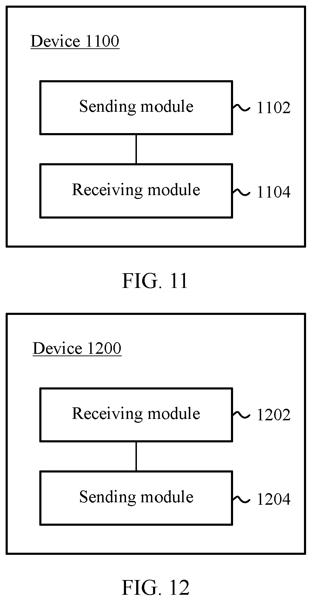

FIG. 11 is a schematic diagram of a structure of a PIN creation apparatus according to an embodiment of this application. The apparatus may correspond to a user equipment in another embodiment, such as a PEMC. As shown in FIG. 11, the apparatus 1100 includes the following modules:
a sending module 1102, configured to send networking request information to a PIN server, where the networking request information is used to request to create a PIN; and
a receiving module 1104, configured to receive networking response information from the PIN server, where the networking response information includes creation success information or creation failure information, the creation success information indicates that the PIN is successfully created, and the creation failure information indicates that the PIN fails to be created.

In the PIN creation apparatus provided by embodiments of this application, the sending module sends the networking request information to the PIN server. The networking request information is used to request to create the PIN. The receiving module receives the networking response information. The networking response information includes creation success information or the creation failure information. That is, after verifying the networking request information, the PIN server may agree or disagree to a networking request. Embodiments of this application enable the user equipment to create the PIN. This is conducive to meeting a requirement of communication between devices by using the PIN. The creation failure information indicates that the networking request is not agreed to, and the PIN server may indicate the reason for this networking failure.

Optionally, in an embodiment, the networking request information includes at least one of the following: (1) life cycle information of the PIN, where the life cycle information is used to indicate a time when the PIN takes effect or exists; (2) identifier information related to the apparatus; (3) an IP address or a port number of the apparatus; (4) information of a PIN element that the apparatus expects to add to the PIN; (5) information of a PEGC in the PIN; and (6) a security credential.

Optionally, in an embodiment, the identifier information related to the apparatus includes at least one of the following: an identifier ID of a PEMC in the PIN, an enabler ID of the apparatus, an SUPI of the apparatus, a GPSI of the apparatus, an application ID on the PEMC in the PIN, and an enabled client ID of the PEMC in the PIN.

Optionally, in an embodiment, the information of the PIN element includes at least one of the following: an ID of the PIN element, an enabler ID of the PIN element, a user equipment ID of the PIN element, the application ID on the PEMC in the PIN, an IP address of the PIN element, and an enabler IP address of the PIN element.

Optionally, in an embodiment, the information of the PEGC includes at least one of the following: an ID of the PEGC, an enabler ID of the PEGC, a user equipment ID of the PEGC, an application ID on the PEGC, and an IP address of the PEGC.

Optionally, in an embodiment, the creation success information includes at least one of the following: (1) an identifier ID of the PIN; (2) the information of the PEGC in the PIN; (3) access control information configured to the PEGC in the PIN, where the access control information is used to control whether the PIN element in the PIN can visit or access a target network; and (4) routing information configured to the PEGC in the PIN, where the routing information is used for the PEGC or the PIN element in the PIN to visit the target network.

Optionally, in an embodiment, the access control information includes at least one of the following: a user name, an account number, a password, an SSID, and a BSSID; and/or the routing information includes at least one of the following: an IP address of a UPF, a port number of the UPF, an FQDN of the UPF, and a data network DN connected by using the UPF, where the PEGC visits the target network by accessing the UPF.

Optionally, in an embodiment, the apparatus determine the PEGC in the PIN in at least one of the following manners. (1) The PEGC subscribes to or registers in the apparatus. (2) The creation success information includes the information of the PEGC. (3) The PIN element in the PIN managed by the apparatus visits the target network by using the determined PEGC in the PIN.

Optionally, in an embodiment, in a case that the PEGC subscribes to or registers in the apparatus, the apparatus establishes a communication connection to the PEGC through non-3GPP access. The receiving module 1104 receives first registration request information from the PEGC, and verifies the first registration request information. The sending module 1102 sends first registration response information. The first registration response information includes registration success information or registration failure information, the registration success information indicates that the first registration request information has been verified, and the registration failure information indicates that the first registration request information fails to be verified.

Optionally, in an embodiment, the first registration request information includes at least one of the following: the ID of the PEGC, the enabler ID of the PEGC, an ID of the user equipment, the application ID on the PEGC, the IP address of the PEGC, a security credential, access control information, and routing information; and/or the first registration response information includes at least one of the following: a registration ID, registration termination time information, and a context ID of the PEGC.

Optionally, in an embodiment, the apparatus is further configured to add a PIN element to the PIN.

Optionally, in an embodiment, the apparatus is further configured to establish a communication connection to the PIN element through a non-3GPP access. The receiving module 1104 is configured to: receive second registration request information from the PIN element; and in a case that a second registration request has been verified, add the PIN element to the PIN. The sending module 1102 is configured to send second registration response information.

Optionally, in an embodiment, the second registration request information includes at least one of the following: the ID of the PIN element, the enabler ID of the PIN element, an application ID on the PIN element, the IP address of the PIN element, and the security credential; and/or the second registration response information includes at least one of the following: the registration ID, the registration termination time information, a context ID of the PIN element, and an ID of the PIN.

Optionally, in an embodiment, the apparatus is further configured to determine permission of the PIN element. The second registration response information further includes at least one of the following: (1) an IP address of the PEGC in the PIN; (2) a port number of the PEGC in the PIN; and (3) access permission of the PIN element, where the access permission includes whether the PIN element supports access to the target network by using the PEGC in the PIN.

Optionally, in an embodiment, the access permission of the PIN element is obtained by the apparatus from the PIN server, or is determined by the apparatus based on registration information of the PEGC.

Optionally, in an embodiment, the sending module 1102 is configured to send subscription request information to the PIN server. The subscription request information is used to request at least one of the following: becoming a PEMC; and registering in or subscribing to an operator network. The receiving module 1104 is configured to receive subscription success information from the PIN server. The subscription success information indicates that the apparatus becomes a PEMC.

Optionally, in an embodiment, the subscription request information includes at least one of the following: the application ID on the PEMC, an SUPI of the apparatus, a GPSI of the apparatus, an IP address of the apparatus, a PEMC client IP address, and the security credential.

The apparatus 1100 according to this embodiment of this application may correspond to the processes of the method 200 in embodiments of this application, and units/modules in the apparatus 1100 and the foregoing operations and/or functions are separately for implementing the corresponding processes of the method 200, and a same or equivalent technical effect can be achieved. For brevity, details are not described herein again.

FIG. 12 is a schematic diagram of a structure of a PIN creation apparatus according to an embodiment of this application. The apparatus may correspond to a PIN server in another embodiment. As shown in FIG. 12, the apparatus 1200 includes the following modules:
a receiving module 1202, configured to receive networking request information from a user equipment, where the networking request information is used to request to create a PIN; and
a sending module 1204, configured to send networking response information to the user equipment, where the networking response information includes creation success information or creation failure information, the creation success information indicates that the PIN is successfully created, and the creation failure information indicates that the PIN fails to be created.

In the PIN creation method provided by embodiments of this application, the apparatus 1200 receives the networking request information. The networking request information is used to request to create the PIN. The apparatus 1200 sends the networking response information to the user equipment. The networking response information includes the creation success information or the creation failure information. That is, after verifying the networking request information, the apparatus 1200 may agree or disagree to a networking request of the user equipment. Embodiments of this application enable the user equipment to create the PIN. This is conducive to meeting a requirement of communication between devices by using the PIN. The creation failure information indicates that the networking request is not agreed to, and the apparatus 1200 may indicate the reason for this networking failure.

Optionally, in an embodiment, the networking request information includes at least one of the following: (1) life cycle information of the PIN, where the life cycle information is used to indicate a time when the PIN takes effect or exists; (2) identifier information related to the user equipment; (3) an IP address or a port number of the user equipment; (4) information of a PIN element that the user equipment expects to add to the PIN; (5) information of a PEGC in the PIN; and (6) a security credential.

Optionally, in an embodiment, the identifier information related to the user equipment includes at least one of the following: an ID of a PEMC in the PIN, an enabler ID of the user equipment, an SUPI of the user equipment, a GPSI, an application ID on the PEMC in the PIN, and an enabled client ID of the PEMC.

Optionally, in an embodiment, the information of the PIN element includes at least one of the following: an ID of the PIN element, an enabler ID of the PIN element, a user equipment ID of the PIN element, the application ID on the PEMC in the PIN, an IP address of the PIN element, and an enabler IP address of the PIN element.

Optionally, in an embodiment, the information of the PEGC includes at least one of the following: an ID of the PEGC, an enabler ID of the PEGC, a user equipment ID of the PEGC, an application ID on the PEGC, and an IP address of the PEGC.

Optionally, in an embodiment, the creation success information includes at least one of the following: (1) an identifier ID of the PIN; (2) the information of the PEGC in the PIN; (3) access control information configured to the PEGC in the PIN, where the access control information is used to control whether the PIN element in the PIN can visit or access a target network; and (4) routing information configured to the PEGC in the PIN, where the routing information is used for the PEGC or the PIN element in the PIN to visit the target network.

Optionally, in an embodiment, the access control information includes at least one of the following: a user name, an account number, a password, an SSID, and a BSSID; and/or the routing information includes at least one of the following: an IP address of a UPF, a port number of the UPF, an FQDN of the UPF, and a data network DN connected by using the UPF, where the PEGC visits the target network by accessing the UPF.

Optionally, in an embodiment, the sending module 1204 is configured to send the information of the PEGC in the PIN to the user equipment.

The apparatus 1200 according to this embodiment of this application may correspond to the processes of the method 300 in embodiments of this application, and units/modules in the apparatus 1200 and the foregoing operations and/or functions are separately for implementing the corresponding processes of the method 300, and a same or equivalent technical effect can be achieved. For brevity, details are not described herein again.

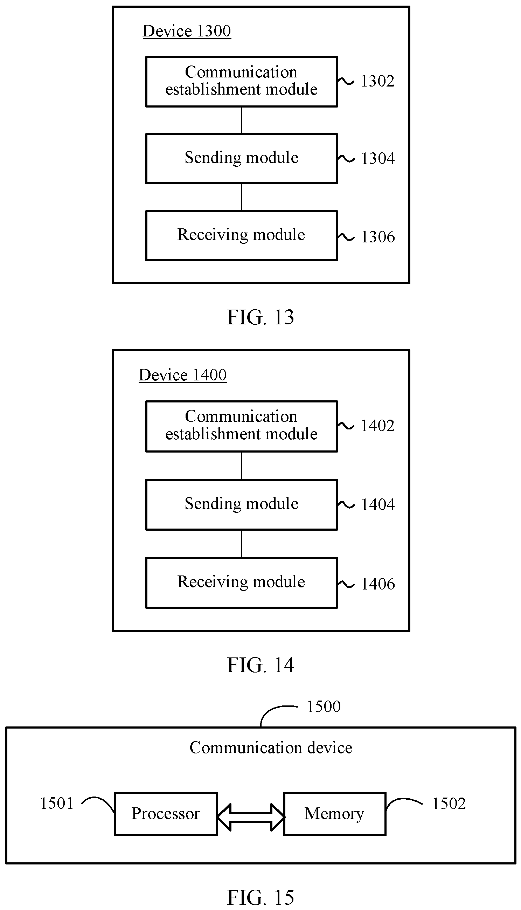

FIG. 13 is a schematic diagram of a structure of a PIN creation apparatus according to an embodiment of this application. The apparatus may correspond to a user equipment in another embodiment, such as a PEGC. As shown in FIG. 13, the apparatus 1300 includes the following modules:
a communication establishment module 1302, configured to create a communication connection to a PEMC through non-3GPP access;
a sending module 1304, configured to send first registration request information to the PEMC, where the first registration request information is used to request to become a PEGC in the PIN; and
a receiving module 1306, configured to receive first registration response information from the PEMC, where the first registration response information includes registration success information or registration failure information, the registration success information indicates that the first registration request information has been verified, and the registration failure information indicates that the first registration request information fails to be verified. The verification failure means that a registration request has not been agreed to, and the PEMC may indicate the reason for this registration failure.

The PIN creation apparatus provided by embodiments of this application can be applied to become the PEGC in the PIN. The PEGC enables a PIN element in the PIN to visit a 5G network or visit another service server by using the 5G network. This is conducive to meeting a communication requirement of the device by using the PIN.

Optionally, in an embodiment, the first registration request information includes at least one of the following: an ID of the apparatus, an enabler ID of the apparatus, an application ID on the apparatus, an IP address of the apparatus, a security credential, access control information, and routing information; and/or the first registration response information includes at least one of the following: a registration ID, registration termination time information, and a context ID of the apparatus.

The apparatus 1300 according to this embodiment of this application may correspond to the processes of the method 400 in embodiments of this application, and units/modules in the apparatus 1300 and the foregoing operations and/or functions are separately for implementing the corresponding processes of the method 400, and a same or equivalent technical effect can be achieved. For brevity, details are not described herein again.

FIG. 14 is a schematic diagram of a structure of a PIN creation apparatus according to an embodiment of this application. The apparatus may correspond to a user equipment in another embodiment, such as a PIN element. As shown in FIG. 14, the apparatus 1400 includes the following modules:
a communication establishment module 1402, configured to establish a communication connection to a PEMC through non-3GPP access;
a sending module 1404, configured to send second registration request information to the PEMC, where the second registration request information is used to request to become a PIN element in a PIN; and
a receiving module 1406, configured to receive second registration response information from the PEMC, where the second registration response information includes registration success information or registration failure information, the registration success information indicates that the second registration request information has been verified, and the registration failure information indicates that the second registration request information fails to be verified. The verification failure means that a registration request has not been agreed to, and the PEMC may indicate the reason for this registration failure.

The PIN creation apparatus provided by embodiments of this application can be applied to become the PIN element in the PIN. The PIN element can visit a 5G network by using a PEGC in the PIN or visit another service server by using the 5G network. This is conducive to meeting a communication requirement.

Optionally, in an embodiment, the second registration request information includes at least one of the following: an ID of the apparatus, an enabler ID of the apparatus, an application ID on the apparatus, an IP address of the apparatus, and a security credential; and/or the second registration response information includes at least one of the following: a registration ID, registration termination time information, a context ID of the user equipment, an ID of the user equipment, and an ID of the user equipment.

Optionally, in an embodiment, the second registration response information also includes at least one of the following: (1) an IP address of the PEGC in the PIN; (2) a port number of the PEGC in the PIN; and (3) access permission of the apparatus, where the access permission includes whether the apparatus supports access to a target network by using the PEGC in the PIN.

The apparatus 1400 according to this embodiment of this application may correspond to the processes of the method 500 in embodiments of this application, and units/modules in the apparatus 1400 and the foregoing operations and/or functions are separately for implementing the corresponding processes of the method 500, and a same or equivalent technical effect can be achieved. For brevity, details are not described herein again.

The PIN creation apparatus in embodiments of this application may be an electronic device, such as an electronic device with an operating system, or may be a component in the electronic device, such as an integrated circuit or chip. The electronic device may be a user equipment, or another device other than the user equipment. For example, the user equipment may include but is not limited to the foregoing listed type of the user equipment 11. The another device may be a server, a network attached storage (Network Attached Storage, NAS), and the like. This is not specifically limited in embodiments of this application.

The PIN creation apparatus provided in embodiments of this application can implement the processes implemented in the method embodiments of FIG. 2 to FIG. 10, and a same technical effect can be achieved. To avoid repetition, details are not described herein again.

Optionally, as shown in FIG. 15, an embodiment of this application further provides a communication device 1500, including a processor 1501, a memory 1502, and a program or an instruction stored in the memory 1502 and executable on the processor 1501. For example, when the communication device 1500 is a user equipment, when the program or the instruction is executed by the processor 1501, the process steps of the PIN creation method embodiment are implemented, and a same technical effect can be achieved. When the communication device 1500 is a network side device, when the program or the instruction is executed by the processor 1501, the steps of the PIN creation method embodiment are implemented, and a same technical effect can be achieved. To avoid repetition, details are not described herein again.

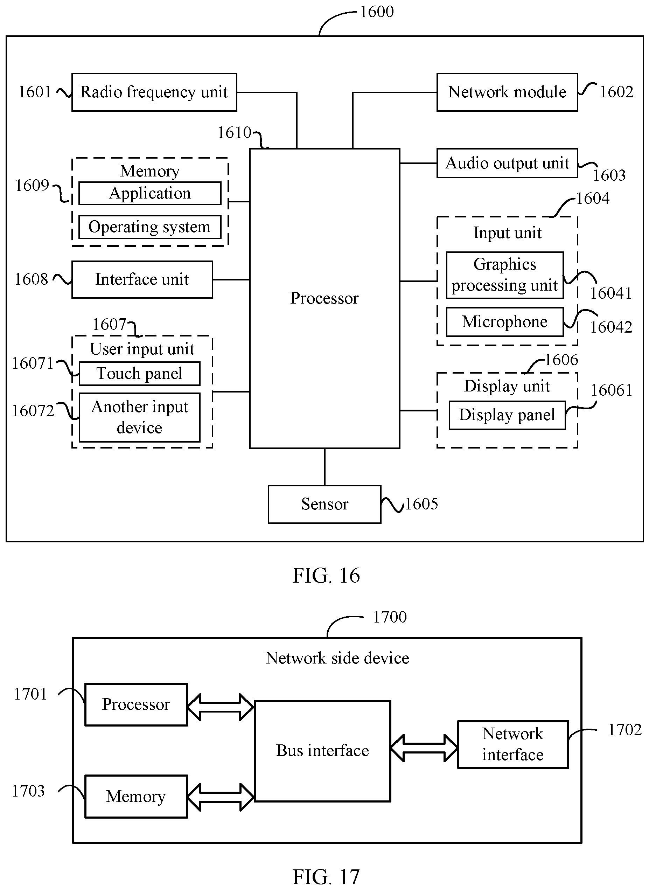

An embodiment of this application further provides a user equipment, including a processor and a communication interface. The communication interface is configured to implement the steps of the method in the embodiment shown in FIG. 2, FIG. 4 or FIG. 5. The user equipment embodiment is corresponding to the foregoing user equipment side method embodiment, each implementation process and implementation of the method embodiment can be applied to the user equipment embodiment, and a same technical effect can be achieved. Specifically, FIG. 16 is a schematic diagram of a hardware structure of a user equipment according to an embodiment of this application.

The user equipment 1600 includes but is not limited to at least a part of components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art can understand that the user equipment 1600 may further include a power supply (such as a battery) that supplies power to each component. The power supply may be logically connected to the processor 1610 by using a power supply management system, to implement functions such as charging and discharging management, and power consumption management by using the power supply management system. The user equipment structure shown in FIG. 16 constitutes no limitation on the user equipment, and the user equipment may include more or fewer components than those shown in the figure, or combine some components, or have different component arrangements. Details are not described herein.

It should be understood that in this embodiment of this application, the input unit 1604 may include a graphics processing unit (Graphics Processing Unit, GPU) 16041 and a microphone 16042. The graphics processing unit 16041 processes image data of a static picture or a video obtained by an image capture apparatus (for example, a camera) in a video capture mode or an image capture mode. The display unit 1606 may include a display panel 16061, and the display panel 16061 may be configured in a form of a liquid crystal display, an organic light-emitting diode, or the like. The user input unit 1607 includes at least one of a touch panel 16071 and another input device 16072. The touch panel 16071 is also referred to as a touchscreen. The touch panel 16071 may include two parts: a touch detection apparatus and a touch controller. The another input device 16072 may include but is not limited to a physical keyboard, a functional button (such as a volume control button or a power on/off button), a trackball, a mouse, and a joystick. Details are not described herein.

In this embodiment of this application, the radio frequency unit 1601 receives downlink data from a network side device and then sends the downlink data to the processor 1610 for processing; and the radio frequency unit 1601 may send uplink data to the network side device. Generally, the radio frequency unit 1601 includes but is not limited to an antenna, an amplifier, a transceiver, a coupler, a low noise amplifier, a duplexer, and the like.

The memory 1609 may be configured to store a software program or an instruction and various data. The memory 1609 may mainly include a first storage area for storing a program or an instruction and a second storage area for storing data. The first storage area may store an operating system, and an application or an instruction required by at least one function (for example, a sound playing function or an image playing function). In addition, the memory 1609 may be a volatile memory or a nonvolatile memory, or the memory 1609 may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1609 in this embodiment of this application includes but is not limited to these memories and any memory of another proper type.

The processor 1610 may include one or more processing units. Optionally, an application processor and a modem processor are integrated into the processor 1610. The application processor mainly processes an operating system, a user interface, an application, or the like. The modem processor mainly processes a wireless communication signal, for example, a baseband processor. It may be understood that, alternatively, the modem processor may not be integrated into the processor 1610.

The radio frequency unit 1601 can be configured to implement the steps of the method in the embodiment shown in FIG. 2, FIG. 4, or FIG. 5.

The user equipment 1600 provided in this embodiment of this application can implement the processes of the foregoing embodiment of the PIN creation method, and a same technical effect can be achieved. To avoid repetition, details are not described herein again.

An embodiment of this application further provides a network side device, including a processor and a communication interface. The communication interface is configured to implement the steps of the method in the embodiment shown in FIG. 3. This network side device embodiment is corresponding to the foregoing method embodiment of the network side device. Each implementation process and implementation of the foregoing method embodiment may be applicable to this network side device embodiment, and a same technical effect can be achieved.

Specifically, an embodiment of this application further provides a network side device. As shown in FIG. 17, the network device 1700 includes: a processor 1701, a network interface 1702, and a memory 1703. The network interface 1702 is, for example, a common public radio interface (common public radio interface, CPRI).

Specifically, the network side device 1700 in this embodiment of this invention further includes an instruction or a program stored in the memory 1703 and executable on the processor 1701. The processor 1701 invokes the instruction or the program in the memory 1703 to perform the method performed by the modules shown in FIG. 12, and a same technical effect is achieved. To avoid repetition, details are not described herein again.

An embodiment of this application further provides a readable storage medium. The readable storage medium stores a program or an instruction. When the program or the instruction is executed by a processor, the processes of the foregoing PIN creation method embodiment are implemented, and a same technical effect can be achieved. To avoid repetition, details are not described herein again.

The processor is a processor in the user equipment in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing PIN creation method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement the processes of the foregoing PIN creation method embodiment, and a same technical effect can be achieved. To avoid repetition, details are not described herein again.

An embodiment of this application further provides a PIN creation system, including a user equipment and a network side device. The user equipment may be configured to perform the steps of the PIN creation method, and the network side device may be configured to perform the steps of the PIN creation method.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a user equipment (which may be a mobile phone, a computer, a server, an air conditioner, a network device, or the like) to perform the methods described in embodiments of this application.

Embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A personal internet of things network PIN creation method, comprising:
sending, by a user equipment, networking request information to a PIN server, wherein the networking request information is used to request to create a PIN; and
receiving, by the user equipment, networking response information from the PIN server, wherein the networking response information comprises creation success information or creation failure information, the creation success information indicates that the PIN is successfully created, and the creation failure information indicates that the PIN fails to be created.

2. The method according to claim 1, wherein the networking request information comprises at least one of the following:
life cycle information of the PIN, wherein the life cycle information is used to indicate a time when the PIN takes effect or exists;
identifier information related to the user equipment;
an IP address or a port number of the user equipment;
information of a PIN element that the user equipment expects to add to the PIN;
information of a personal internet of things network element with gateway capability PEGC in the PIN; and
a security credential.

3. The method according to claim 2, wherein the identifier information related to the user equipment comprises at least one of the following: an identity ID of a personal internet of things network element with management capability PEMC in the PIN, an enabler ID of the user equipment, a subscription permanent identifier SUPI of the user equipment, a generic public subscription identifier GPSI of the user equipment, an application ID on the PEMC in the PIN, and an enabled client ID of the PEMC in the PIN.

4. The method according to claim 2, wherein the information of the PIN element comprises at least one of the following: an ID of the PIN element, an enabler ID of the PIN element, a user equipment ID of the PIN element, an application ID on a PEMC in the PIN, an IP address of the PIN element, and an enabler IP address of the PIN element.

5. The method according to claim 2, wherein the information of the PEGC comprises at least one of the following: an ID of the PEGC, an enabler ID of the PEGC, a user equipment ID of the PEGC, an application ID on the PEGC, and an IP address of the PEGC.

6. The method according to any one of claims 1 to 5, wherein the creation success information comprises at least one of the following:
an identifier ID of the PIN;
information of a PEGC in the PIN;
access control information configured to the PEGC in the PIN, wherein the access control information is used to control whether a PIN element in the PIN can visit or access a target network; and
routing information configured to the PEGC in the PIN, wherein the routing information is used for the PEGC or the PIN element in the PIN to visit the target network.

7. The method according to claim 6, wherein
the access control information comprises at least one of the following: a user name, an account number, a password, a service set identifier SSID, and a basic service set identifier BSSID; and/or
the routing information comprises at least one of the following: an IP address of a user plane function UPF, a port number of the UPF, an FQDN of the UPF, and a data network DN connected by using the UPF, wherein the PEGC visits the target network by accessing the UPF.

8. The method according to any one of claims 1 to 7, wherein the user equipment determines a PEGC in the PIN by using at least one of the following methods:
the PEGC subscribes to or registers in the user equipment;
the creation success information comprises information of the PEGC; and
a PIN element in the PIN managed by the user equipment visits a target network by using the determined PEGC in the PIN.

9. The method according to claim 8, wherein in a case that the PEGC subscribes to or registers in the user equipment, the method further comprises:
the user equipment establishes a communication connection to the PEGC through non-3GPP access;
the user equipment receives first registration request information from the PEGC; and
the user equipment verifies the first registration request information and sends first registration response information, wherein the first registration response information comprises registration success information or registration failure information, the registration success information indicates that the first registration request information has been verified, and the registration failure information indicates that the first registration request information fails to be verified.

10. The method according to claim 9, wherein
the first registration request information comprises at least one of the following: an ID of the PEGC, an enabler ID of the PEGC, an ID of the user equipment, an application ID on the PEGC, an IP address of the PEGC, a security credential, access control information, and routing information; and/or
the first registration response information comprises at least one of the following: a registration ID, registration termination time information, and a context ID of the PEGC.

11. The method according to any one of claims 1 to 10, wherein the method further comprises:
adding, by the user equipment, a PIN element to the PIN.

12. The method according to claim 11, wherein the adding, by the user equipment, a PIN element to the PIN comprises:
establishing, by the user equipment, a communication connection to the PIN element through a non-3GPP access;
receiving, by the user equipment, second registration request information from the PIN element;
in a case that the second registration request has been verified, adding, by the user equipment, the PIN element to the PIN; and
sending, by the user equipment, second registration response information.

13. The method according to claim 11, wherein
the second registration request information comprises at least one of the following: an ID of the PIN element, an enabler ID of the PIN element, an application ID on the PIN element, an IP address of the PIN element, and a security credential; and/or
the second registration response information comprises at least one of the following: a registration ID, registration termination time information, a context ID of the PIN element, and an ID of the PIN.

14. The method according to claim 13, wherein the method further comprises: determining, by the user equipment, permission of the PIN element, wherein the second registration response information further comprises at least one of the following:
an IP address of a PEGC in the PIN;
a port number of the PEGC in the PIN; and
access permission of the PIN element, wherein the access permission comprises whether the PIN element supports access to the target network by using the PEGC in the PIN.

15. The method according to claim 14, wherein the access permission of the PIN element is obtained by the user equipment from the PIN server, or is determined by the user equipment based on PEGC registration information.

16. The method according to any one of claims 1 to 15, wherein before the sending, by a user equipment, a networking request information to a PIN server, the method further comprises:
sending, by the user equipment, subscription request information to the PIN server, wherein the subscription request information is used to request at least one of the following: becoming a PEMC; and registering in or subscribing to an operator network; and
receiving, by the user equipment, subscription success information from the PIN server, wherein the subscription success information indicates the user equipment to become the PEMC.

17. The method according to claim 16, wherein the subscription request information comprises at least one of the following: an application ID on the PEMC, an SUPI of the user equipment, a GPSI of the user equipment, an IP address of the user equipment, an IP address of a PEMC client, and a security credential.

18. A PIN creation method, comprising:
receiving, by a PIN server, networking request information from a user equipment, wherein the networking request information is used to request to create a PIN; and
sending, by the PIN server, networking response information to the user equipment, wherein the networking response information comprises creation success information or creation failure information, the creation success information indicates that the PIN is successfully created, and the creation failure information indicates that the PIN fails to be created.

19. The method according to claim 18, wherein the networking request information comprises at least one of the following:
life cycle information of the PIN, wherein the life cycle information is used to indicate a time when the PIN takes effect or exists;
identifier information related to the user equipment;
an IP address or a port number of the user equipment;
information of a PIN element that the user equipment expects to add to the PIN;
information of a PEGC in the PIN; and
a security credential.

20. The method according to claim 19, wherein the identifier information related to the user equipment comprises at least one of the following: an identifier ID of a PEMC in the PIN, an enabler ID of the user equipment, an SUPI of the user equipment, a GPSI of the user equipment, an application ID on the PEMC in the PIN, and an enabled client ID of the PEMC.

21. The method according to claim 19, wherein the information of the PIN element comprises at least one of the following: an ID of the PIN element, an enabler ID of the PIN element, a user equipment ID of the PIN element, an application ID on a PEMC in the PIN, an IP address of the PIN element, and an enabler IP address of the PIN element.

22. The method according to claim 19, wherein the information of the PEGC comprises at least one of the following: an ID of the PEGC, an enabler ID of the PEGC, a user equipment ID of the PEGC, an application ID on the PEGC, and an IP address of the PEGC.

23. The method according to claims 18 to 22, wherein the creation success information comprises at least one of the following:
an identifier ID of the PIN;
information of a PEGC in the PIN;
access control information configured to the PEGC in the PIN, wherein the access control information is used to control whether a PIN element in the PIN can visit or access a target network; and
routing information configured to the PEGC in the PIN, wherein the routing information is used for the PEGC or the PIN element in the PIN to visit the target network.

24. The method according to claim 23, wherein
the access control information comprises at least one of the following: a user name, an account number, a password, an SSID, a BSSID; and/or
the routing information comprises at least one of the following: an IP address of a UPF, a port number of the UPF, an FQDN of the UPF, and a data network DN connected by using the UPF, wherein the PEGC visits the target network by accessing the UPF.

25. The method according to claim 18, wherein the method further comprises:
sending, by the PIN server, information of a PEGC in the PIN to the user equipment.

26. A PIN creation method, comprising:
establishing, by a user equipment, a communication connection to a PEMC through non-3GPP access;
sending, by the user equipment, first registration request information to the PEMC, wherein the first registration request information is used to request to become a PEGC in a PIN; and
receiving, by the user equipment, first registration response information from the PEMC, wherein the first registration response information comprises registration success information or registration failure information, the registration success information indicates that the first registration request information has been verified, and the registration failure information indicates that the first registration request information fails to be verified.

27. The method according to claim 26, wherein
the first registration request information comprises at least one of the following: an ID of the user equipment, an enabler ID of the user equipment, an application ID on the user equipment, an IP address of the user equipment, a security credential, and access control information, routing information; and/or
the first registration response information comprises at least one of the following: registration ID, registration termination time information, and a context ID of the user equipment.

28. A PIN creation method, comprising:
establishing, by a user equipment, a communication connection to a PEMC through non-3GPP access;
sending, by the user equipment, second registration request information to the PEMC, wherein the second registration request information is used to request to become a PIN element in a PIN; and
receiving, by the user equipment, second registration response information from the PEMC, wherein the second registration response information comprises registration success information or registration failure information, the registration success information indicates that the second registration request information has been verified, and the registration failure information indicates that the second registration request information fails to be verified.

29. The method according to claim 28, wherein
the second registration request information comprises at least one of the following: an ID of the user equipment, an enabler ID of the user equipment, an application ID on the user equipment, an IP address of the user equipment, and a security credential; and/or
the second registration response information comprises at least one of the following: a registration ID, registration termination time information, a context ID of the user equipment, and the ID of the user equipment.

30. The method according to claim 29, wherein the second registration response information further comprises at least one of the following:
an IP address of a PEGC in the PIN;
a port number of the PEGC in the PIN; and
access permission of the user equipment, wherein the access permission comprises whether the user equipment supports access to a target network by using the PEGC in the PIN.

31. A PIN creation apparatus, comprising:
a sending module, configured to send networking request information to a PIN server, wherein the networking request information is used to request to create a PIN; and
a receiving module, configured to receive networking response information from the PIN server, wherein the networking response information comprises creation success information or creation failure information, the creation success information indicates that the PIN is successfully created, and the creation failure information indicates that the PIN fails to be created.

32. A PIN creation apparatus, comprising:
a receiving module, configured to receive networking request information from a user equipment, wherein the networking request information is used to request to create a PIN; and
a sending module, configured to send networking response information to the user equipment, wherein the networking response information comprises creation success information or creation failure information, the creation success information indicates that the PIN is successfully created, and the creation failure information indicates that the PIN fails to be created.

33. A PIN creation apparatus, comprising:
a communication establishment module, configured to establish a communication connection to a PEMC through non-3GPP access;
a sending module, configured to send first registration request information to the PEMC, wherein the first registration request information is used to request to become a PEGC in a PIN; and
a receiving module, configured to receive first registration response information from the PEMC, wherein the first registration response information comprises registration success information or registration failure information, the registration success information indicates that the first registration request information has been verified, and the registration failure information indicates that the first registration request information fails to be verified.

34. A PIN creation apparatus, comprising:
a communication establishment module, configured to establish a communication connection to a PEMC through non-3GPP access;
a sending module, configured to send second registration request information to the PEMC, wherein the second registration request information is used to request to become a PIN element in a PIN; and
a receiving module, configured to receive second registration response information from the PEMC, wherein the second registration response information comprises registration success information or registration failure information, the registration success information indicates that the second registration request information has been verified, and the registration failure information indicates that the second registration request information fails to be verified.

35. A user equipment, comprising a processor, a memory, and a program or an instruction stored in the memory and executable on the processor, wherein when the program or the instruction is executed by the processor, the steps of the PIN creation method according to any one of claims 1 to 17, or the steps of the PIN creation method according to any one of claims 26 to 30 are implemented.

36. A network side device, comprising a processor and a memory, wherein the memory stores a program or an instruction executable on the processor, and when the program or the instruction is executed by the processor, the steps of the PIN creation method according to any one of claims 18 to 25 are implemented.

37. A readable storage medium, wherein the readable storage medium stores a program or an instruction, and when the program or the instruction is executed by a processor, the steps of the PIN creation method according to any one of claims 1 to 30 are implemented.
